# EUROPEAN PATENT SPECIFICATION

(11) **EP 2 270 967 B1**
(45) Date of publication and mention of the grant of the patent: **13.03.2019**
(21) Application number: 09290514.0
(22) Date of filing: 30.06.2009
(51) Int. Cl.: H02M 3/335

(54) **System and method for providing electric power to a submerged load**
System und Verfahren zur Bereitstellung von elektrischer Leistung an eine Unterwasserlast
Système et procédé de fourniture d'une alimentation électrique à une charge submergée

(43) Date of publication of application: 05.01.2011
(73) Proprietor: Alcatel Lucent, 91620 Nozay (FR)
(72) Inventor: Verhaege, Thierry, Route de Villejust 91620 Nozay (FR); Julien, Bernard, Route de Villejust 91620 Nozay (FR)
(74) Representative: Nokia EPO representatives

(56) References cited:
- EP-A- 0 226 801
- EP-A- 1 710 899

## Description

The present invention relates to supplying power to a submerged equipment.

### BACKGROUND ART

It is known that in submarine telecommunications where some equipment cannot be locally supplied with electrical power, such electrical power needs to be supplied from a remote power supply. For example in submarine applications power may be supplied from remote stations, typically on land, to submerged equipment such as a repeater which are typically located under water.

There are also other applications, outside the telecommunications field, that may require such remote powering for operating a manifold of submerged equipment and which in occasions receive such power supply through submarine telecommunications cables. Examples of such applications are equipment used in scientific investigation as well as in oil and gas farshore extraction works. Telecommunications in submarine applications are typically provided by optical submarine links, where such links may typically include a plurality of repeaters. A repeater typically requires a relatively low electric power (typically about 20 W. A constant DC current (typically about 1 A) flows along the cable in order to feed in series the - usually more than one - repeaters. The power source has to compensate the voltage drop cumulated by the repeaters and the cable, typically about 10 KV. However, in case of need to supply power to other equipment requiring different levels of power (for example variable loads requiring up to about 10 kW with constant voltage of typically about 400 V), the optical submarine links need to be adapted so as to enable them to convey power to such other equipment, which are often scattered at different locations throughout the link or the network.

EP 0226801 A discloses a power supply circuit, which steps down an input voltage, is provided in an optical repeater for an optical communications path. A DC current supplied from a regulated current supply through a conductor is increased by the power supply circuit before being provided to the amplifier circuit of the optical repeater, so that power consumption is reduced.

EP 1710889 A discloses a switched mode power supply with programmable digital control and a power supply system comprising a plurality of switched mode power supplies. The input terminals and the output terminals of the switched mode power supply system are separated by an insulation barrier, and the switched mode power supply comprises a conversion stage having at least one switching element. The switching element of the conversion stage is digitally controlled by a programmable digital circuit which is located on the primary side of the insulation barrier. The programmable digital circuit is adapted to derive the output current (Iₒᵤₜ) from a signal representing the input current of the converter stage (Iᵢₙₜ) by means of executable commands stored in a memory, and to use said derived value of the output current in the control of the switching element.

### SUMMARY

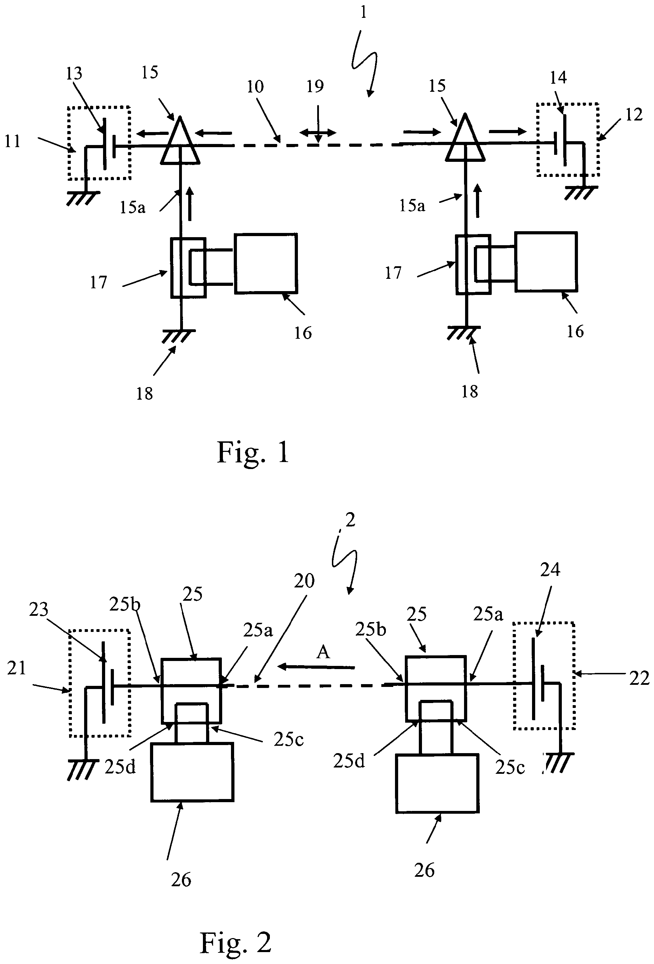

In some known solutions DC/DC converters are connected between the medium voltage backbone (typically about 10 KV) and a local sea earth. Figure 1 schematically illustrates one such known solution which is simplified for the sake of a better understanding of the description.

In figure 1 there is shown a submarine telecommunication network 1 in which a telecommunication link 10 (hereinafter referred to as trunk) is used in order to establish communication between a first end station 11 and a second end station 12. The first end station 11 and the second end station 12 are typically located on land whereas the trunk 10 is submerged in the water through a significant part of its length. The trunk 10 further comprises branching units 15 which serve for branching off power from the trunk 10 to loads 16. Loads 16 may be equipment having use outside the telecommunications field such as for example equipment for oil and/or gas extraction or scientific equipment for deep water scientific research, motors, valves, cameras, robots, vehicles and the like. Repeaters, not shown, for use in telecommunications applications are assumed to be distributed throughout the trunk 10 or branches thereof. It is to be noted that a load may be a repeater as well.

In a typical scenario of the network 1, one or both of the end stations 11 and 12 my have a power source. In figure 1 it is assumed that end station 11 has a power source 13 for supplying about 10KV at 10A on trunk 10; likewise, end station 12 is assumed to have a power source 14 for supplying about 10KV at 10A on trunk 10, however with a polarity opposite to that of power source 13. Loads 16 are coupled to the branch lines 15a by means of respective converters 17. Converters 17 are used for converting the DC voltage of the backbone trunk, 10KV in this example, into a DC voltage appropriate for the use of the load 16. In this example the converted voltage is assumed to be about 400V capable of supplying a current of about 25A. The converters 17 are further connected to a local sea earth 18.

This arrangement however suffers from certain drawbacks. One such drawback is a difficulty to correctly feed the repeaters because some of the repeaters may be located near the power sources 14, 15 and therefore be fed with a high current (typically 10A), while some others may be located near the middle of the trunk where the current is small or even is vanishing for example at an intermediate point as shown by reference numeral 19. Furthermore, the current may in some occasions even vary in its sign, depending on the varying distribution of loads amongst the different branches.

Another drawback is that the relatively high voltage (about 10 KV) applied to the converter makes it necessary to split the voltage into a large number (typically 30) of sub-converters arranged in series. This splitting into a large number of sub-converters significantly increases complexity, unreliability and cost. A further drawback of the above solution is that the relatively high current capability (10 to 30A) of the conventional switching components remains unexploited which is due to the low (1 or 2 A) current absorbed by a converter.

A still further drawback of the known solution is that the derivation of part of the current from the backbone trunk requires specific costly equipment such as branching units, branch cables and sea earth arrangements;
A yet further drawback of the known solution is the problem associated with short circuits in the load. In case a load is short-circuited due to any failure in the load, the trunk is also short-circuited, unless a controller unit in the converter detects the fault and shuts down.

According to some embodiment, there is provided a system for providing electric power through a submarine communication line to a load, the system comprising a converter wherein the converter is connected in series configuration on the submarine communication line and is configured to convert a current flowing in the submarine communication line into a voltage available at parallel ports of the converter.

According to some specific embodiments, the converter comprises a switching arrangement configured to selectively switch electric current to a first winding of a transformer, the transformer comprising a secondary winding connected to a rectifier.

According to some specific embodiments a capacitor is connected in parallel arrangement to the rectifier.

According to some embodiments there is provided a method for providing electric power through a submarine communication line carrying a backbone DC current to a load, the method comprising inputting the backbone DC current from the submarine communication line to a converter connected in series on the submarine communication line, converting the backbone DC current into a voltage, and outputting the backbone DC current to the submarine communication line.

According to some specific embodiments, the backbone DC current input into the converter is selectively switched on in a first direction or in a second direction opposite to the first direction, using a switching arrangement, into a first winding of a transformer thereby inducing an induced current in the secondary winding of the transformer wherein the induced current is input into a rectifier configuration thereby producing a rectified current.

According to some specific embodiments, a variation of the rectified current output from the rectifier is smoothened by means of a capacitor connected in parallel to the rectifier.

According to some specific embodiments, the selective switching of the switching arrangement comprises bypassing the transformer during a controlled period of time.

These and further features and advantages of the present invention are described in more detail in the following description as well as in the claims with the aid of the accompanying drawings.

### BRIEF DESCRIPTION OF THE DRAWINGS

Figure 1, already described, is an exemplary schematic representation of a submarine network in which power is supplied to several loads according to a known solution.
Figure 2 is an exemplary schematic representation of a submarine network in which power is supplied to several loads according to some embodiments.
Figure 3 is an exemplary schematic representation of a converter used for supplying power to a load according to some embodiments.
Figure 4 shows an exemplary sequence of switching steps and corresponding currents generated according to some embodiments.

### DETAILED DESCRIPTION

In figure 2 there is shown a submarine telecommunication network 2 in which a telecommunication link 20 (hereinafter referred to as trunk) is used in order to establish communication between a first end station 21 and a second end station 22. The first end station 21 and the second end station 22 are typically located on land whereas the trunk 20 is submerged through a significant part of its length. Repeaters, not shown, for use in telecommunications applications may be distributed throughout the trunk 20 or branches thereof.

In the scenario of the network 2, end station 21 has a power source 23 for supplying power on trunk 20; likewise, end station 22 has a power source 24 for supplying power on trunk 20, typical values of power supplied by the power supplies are about 10KV at 10A. However, in this case, contrary to the case of the known solution of figure 1, the polarities of the two power sources 23 and 24 are in the same direction. That is to say, when one looks at the figure, the positive poles of each of the two power sources 23 and 24 are shown at the lefthand side and the negative poles of the two power sources are shown at the right hand side of each power supply. This arrangement ensures that independently of the amount of load and equipment on the network, the backbone current A on the trunk is substantially constant along the trunk. In this manner, substantially the same level of current is available along the trunk 20.

As seen in figure 2, converters 25 are connected in series configuration on the trunk 20. Therefore while the converters receive the backbone current A directly at their respective input ports 25a, the loads 26 receive a voltage suitable for their use from the respective output ports 25c and 25d of the converters 25. The backbone current A exits the converter 25 through respective output port 25b. The converters 25 are used for converting the DC current of the backbone trunk 20, for example of about 10A, into a DC voltage appropriate for the use of the load 26. Typical values for the converted voltage may be about 400V and supplying a current of about 25A. The voltage drop on the trunk, from input port 25a to input port 25b is typically about 1KV at full load, and practically null at no load.

With the above arrangement, each of the converters 25 are fed by the same constant current (*e*.*g*. 10 A), whereas the voltage drop produced at each converter 25 may be variable according to the load. The voltage and current provided by the power feed equipment are comparable to that of the known solutions (typically 10 KV, 10 A), with the exception that such equipment are regulated for constant current, instead of constant voltage, and as already mentioned above, they have polarities which are different from the known solutions.

Furthermore, the level of current (typically 10 A) does not exceed the capacity of standard switching components, while the reduced voltage used by the converter (typically 1 KV instead of 10 KV in the known solutions) drastically reduces the number of sub-converters, typically by a factor of 10.

Using the present solution, the relatively high current capability of the switching components is suitably exploited because the converter is connected in series and can therefore take the full backbone current without a need to limit the current.

Another advantage of the present solution is that additional equipment (*e*.*g*. branching units, etc) in order to derive a part of the current from the backbone trunk to a branch are no longer required therefore reducing the cost of the overall system.

Furthermore, in case a load is short-circuited due to any failure in the load, there is no significant surge in the load or trunk current, because the effect would be that the voltage and the power simply drop down.

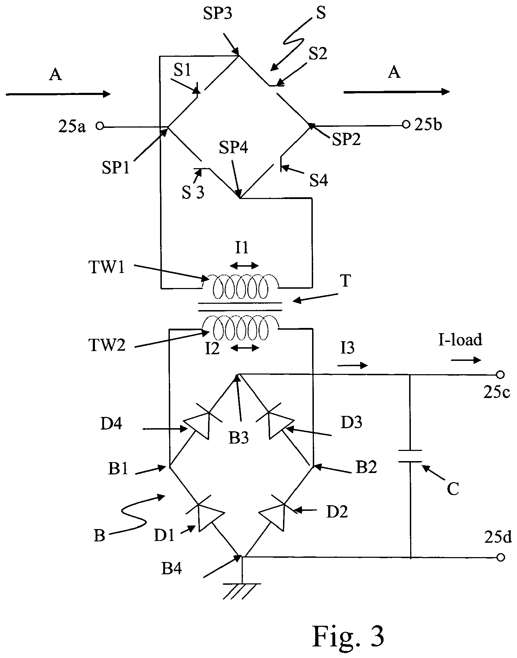

Figure 3 is an exemplary schematic representation of a converter used for supplying power to a load according to some embodiments. As shown in this figure the converter 25 comprises an input port 25a for receiving the backbone current A and a first output port 25b for outputting the backbone current A. The converter 25 further comprises a switching arrangement S typically comprising four switches S1, S2, S3, S4 arranged in bridge configuration.

A first port SP1 of the switching arrangement S is coupled to the input port 25a of the converter 25. A second port SP2 of the switching arrangement S is coupled to the first output port 25b of the converter.

The other two ports of the switching arrangement S are coupled to a transformer T by coupling a third port SP3 of the switching arrangement to a first port of a first winding TW1 of the transformer T, and coupling a fourth port SP4 of the switching arrangement to a second port of the first winding TW1.

The second winding TW2 of the transformer T is coupled to a rectifier B. The first winding TW1 and the second winding TW2 may have the same characteristics, namely they may have the same number of winding.

In the embodiment shown in figure 3, the rectifier B comprises a bridge of four diodes D1, D2, D3 and D4 which is a known configuration to those skilled in the related art. Instead of four diodes, the rectifier B may comprise other structures known to those skilled in the art.

The converter 25 may further comprise a capacitor C, or a bank of capacitors (herein also referred to as a capacitor). In case the load is capacitive by itself, a capacitor C may not be needed because the functionality is provided by the internal capacitance of the load.

In operation, the converter 25 receives an input current A in the input port 25a. The switching arrangement S is then actuated in a selective and time-based manner in order to forward the incoming current to the transformer T.

For example, in a first stage switches S1 and S3 are closed in order to allow the passage of the current A to the first winding TW1 of the transformer T. The flow of current in the first winding TW1, which in itself is a change in current in the first winding, induces an induced current in the second winding TW2. In a next stage, switches S1 and S3 are opened and switches S2 and S4 are closed. This allows for the passage of the current A to the first winding TW1 of the transformer, however this time in a direction opposite to the direction of the current flow in the first stage. The flow of current in the first winding TW1 now in opposite direction, being as such also a change in current in the first winding, induces an induced current in the second winding TW2 which is also in a direction opposite to the direction of the current induced in the second winding TW2 during the first stage. Therefore, the result of the above switching operation is that an alternate current is induced and made available at the ports B1 and B2 of the diode bridge B.

The diode bridge B then rectifies the alternate current input from the second winding TW2 into its ports B1 and B2, and outputs a rectified current at output ports B3 and B4. Output ports B3 and B4 may be connected to a load (not shown) at output ports 25c and 25d of the converter 25.

A capacitor C may be used in parallel configuration with the diode bridge B in order to smoothen the variation of the rectified current output from the converter to the load and to thereby provide a rectified voltage with an approximate shape close to a DC voltage at outputs 25c and 25d of the converter in order to feed the load.

In this manner, the backbone current A provided on the trunk line is converted into a voltage suitable for the use of the load without deriving current directly from the trunk to a load.

The converter of figure 3 may be used as a single converter or, if higher voltage drops are needed, as a sub-converter together with several other similar converters arranged in series on the trunk line and in parallel connection at the output side.

The timing for switching the switches S1, S2, S3, S4 in order to feed and change current supply to the transformer T is automatically controlled in order to maintain the output voltage at the required level at ports 25c and 25d independently of the load.

The transformer T may be bypassed, for example by switching S1 and S2 on, or S3 and S4 on, for a controlled period of time. As a result of bypassing the transformer T, the current at the secondary winding TW2 vanishes periodically which in turn has an impact on the output voltage and current at ports 25c and 25d. However, this impact is averaged over that period due the effect of the capacitor C, thereby allowing a control on the level of the output voltage so as to make it as close to a constant voltage as possible. In this regard, an active control loop may be used with the function of increasing the bypass duration when the output voltage is too high, and decrease the said duration when the output voltage is too low.

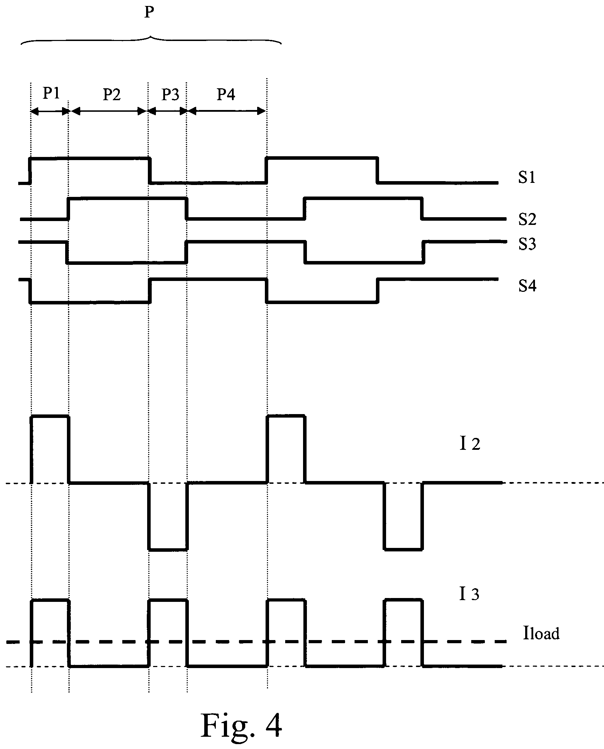

Figure 4 shows an exemplary sequence of switching steps and the corresponding signals generated by the transformer T, the rectifier R and the capacitor C. The graphs of figure 4 show time variations of currents as described below; however similar shapes of graphs may be illustrated to represent voltage variations at the output of the transformer T, the rectifier R and the capacitor C. The description of the switching steps of figure 4 is to be read also with reference to figure 3.

During a switching period P, at a first sub-period P1, switches S1 and S3 are closed thereby causing current to flow through these switches which in figure 4 is shown by a rise in the current value of switches S1 and S3. Switches S2 and S4 are open therefore non-conducting. This causes a current flow I1 in the first winding TW1 of the transformer T which is then induced to generate current 12, in the second winding TW2 of the transformer T. The resulting current is shown in the graph I2 as a rise in the current value in the sub-period P1. The current I2 is rectified in the rectifier B. The resulting current is shown by means of the graph I3 as a rise in the current value in the sub-period P1.

In a second sub-period P2, switch S1 is maintained closed, switch S2 is changed to closed position, switch S3 is changed to open position and switch S4 is maintained open. This is a first by-pass situation to by-pass transformer T as described above. The currents I2 and I3 therefore fall to zero. However due to the effect of the capacitor C, the load current I_{load} is maintained at an average value as shown by a dotted line in figure 4.

In a third sub-period P3, switch S1 is opened, switch S2 is maintained closed, switch S3 is maintained open and switch S4 is now closed. As a result, the direction of the current in the transformer T is reversed. As shown in figure 4, the resulting induced current I2 at the second winding TW2 is also reversed; however the current I3 is rectified by the rectifier B and therefore does not change sign as shown in figure 4 in the sub-period P3.

In a fourth sub-period P4, switch S1 is kept opened, switch S2 is opened, switch S3 is closed and switch S4 is maintained closed. This is a second by-pass situation to by-pass transformer T as described above. The currents I2 and I3 therefore fall to zero. However due to the effect of the capacitor C, the load current I_{load} is maintained at an average value as shown by the dotted line in figure 4.

The switching procedure is then repeated following the same sequences as described above. In figure 4, the load current I_{load} is shown to have a constant value during the switching operation for simplifying the illustration, however, those skilled in the related art will realize that in practice the load current (and also the load voltage) may not be completely constant but due to the effect of the capacitor C, the variations in the load current (and the load voltage) are smoothened in order to approach as much as possible the shape of a DC current (or voltage=.

The switches S1, S2, S3 and S4 may be any known switch such as for example insulated-gate bipolar transistors or MOSFETs.

The converter 25 may include blocks which can be hardware devices, software modules or combination of hardware devices and software modules. For example the selective switching operation in order to actuate switches S1, S2, S3 and S4 may be commanded using any known programmable processor, integrated circuit, FPGA or CPLD.

Therefore, it is understood that the scope of the protection is also extended to a program to be run on a processor. In addition, the scope of protection is extended to a computer readable storage means having a message therein, such computer readable storage means contain program code means for the implementation of one or more steps of the method, when this program is run on a computer, an ASIC, an FPGA or a microprocessor.

Further it is to be noted that the list of structures corresponding to the claimed means is not exhaustive and that one skilled in the art understands that equivalent structures can be substituted for the recited structure without departing from the scope of the invention.

## Claims

1. A system for providing electric power to a load (26) through a submarine communication line (20), the system comprising a converter (25) wherein the converter is connected in series configuration on the submarine communication line (20) and is configured to convert a current (A) flowing in the submarine communication line (20) into a voltage available at parallel ports (25c, 25d) of the converter
**characterised in that**
the converter further comprising a switching arrangement (S), comprising four switches (S1, S2, S3, S4), each switch adapted to be actuated in a selective and time-based manner in order to forward said current to a transformer (T) such that a first actuation of said switches enables a passage of the current to a first winding (TW1) of the transformer in a first direction; a second actuation of said switches enables a passage of the current to the first winding (TW1) of the transformer in a second direction opposite to the first direction; and a third actuation of said switches enables a bypassing of the first winding (TW1) of the transformer.

2. The system of claim 1 wherein the transformer (T) comprises a secondary winding (TW2) connected to a rectifier (B).

3. The system of claim 1 or claim 2 wherein a capacitor (C) is connected in parallel arrangement to the rectifier (B).

4. A submarine telecommunications network (2) comprising the system of any one of claims 1 to 3.

5. A method for providing electric power to a load (26) through a submarine communication line (20) carrying a backbone DC current (A), the method comprising inputting the backbone DC current (A) from the submarine communication line (20) to a converter (25) connected in series on the submarine communication line (20), converting the backbone DC current (A) into a voltage, and outputting the backbone DC current (A) to the submarine communication line (20), wherein the converter (25) comprises a switching arrangement (S), comprising four switches(S1, S2, S3, S4) each switch adapted to be actuated in a selective and time-based manner in order to forward said current to a transformer (T), the method further comprising:
a. actuating said switches to enable a passage of the current to a first winding (TW1) of the transformer in a first direction; or
b. actuating said switches to enable a passage of the current to the first winding (TW1) of the transformer in a second direction opposite to the first direction;
c. actuating said switches to enable a bypassing of the first winding (TW1) of the transformer.

6. The method of claim 5, comprising inducing an induced current in the secondary winding (TW2) of the transformer wherein the induced current is input into a rectifier configuration (B) thereby producing a rectified current.

7. The method of claim 6 wherein a variation of the rectified current output from the rectifier is smoothened by means of a capacitor (C) connected in parallel to the rectifier (B).

8. The method of any one of claims 6 or 7 wherein the step of bypassing the transformer (T) is performed during a controlled period of time.

9. A computer program product directly loadable into the internal memory of a digital computer, comprising software code portions for performing the method of any one claims 5 to 8 when the program is run on a computer.

10. A computer readable storage means containing computer readable program means for carrying out the method of any one of claim 5 to 8.

## Patentansprüche

1. System zur Bereitstellung von elektrischer Leistung an eine Last (26) durch eine Unterwasserkommunikationsleitung (20), wobei das System einen Wandler (25) aufweist, wobei der Wandler in serieller Konfiguration auf der Unterwasserkommunikationsleitung (20) verbunden ist und konfiguriert ist, einen Strom (A), der in der Unterwasserkommunikationsleitung (20) fließt, in eine Spannung umzuwandeln, die bei parallelen Anschlüssen (25c, 25d) des Wandlers verfügbar ist, **dadurch gekennzeichnet, dass** der Wandler ferner eine Schaltanordnung (S) aufweist,
aufweisend vier Schalter (S1, S2, S3, S4), wobei jeder Schalter angepasst ist, auf eine selektive und zeitbasierte Weise betätigt zu werden, um den Strom derart an einen Transformator (T) weiterzuleiten, dass eine erste Betätigung der Schalter einen Durchgang des Stroms zu einer ersten Windung (TW1) des Transformators in einer ersten Richtung ermöglicht; eine zweite Betätigung der Schalter einen Durchgang des Stroms zur ersten Windung (TW1) des Transformators in einer zweiten Richtung entgegen der ersten Richtung ermöglicht; und eine dritte Betätigung der Schalter ein Übergehen der ersten Windung (TW1) des Transformators ermöglicht.

2. System nach Anspruch 1, wobei der Transformator (T) eine sekundäre Windung (TW2) aufweist, die mit einem Gleichrichter (B) verbunden ist.

3. System nach Anspruch 1 oder Anspruch 2, wobei ein Kondensator (C) in paralleler Anordnung mit dem Gleichrichter (B) verbunden ist.

4. Unterwassertelekommunikationsnetzwerk (2), aufweisend das System nach einem der Ansprüche 1 bis 3.

5. Verfahren zur Bereitstellung von elektrischer Leistung an eine Last (26) durch eine Unterwasserkommunikationsleitung (20), die einen Basisgleichstrom (A) trägt, wobei das Verfahren Eingeben des Basisgleichstroms (A) von der Unterwasserkommunikationsleitung (20) in einen Wandler (25) aufweist, der in Serie auf der Unterwasserkommunikationsleitung (20) verbunden ist, den Basisgleichstrom (A) in eine Spannung umwandelt und den Basisgleichstrom (A) an die Unterwasserkommunikationsleitung (20) ausgibt, wobei der Wandler (25) eine Schaltanordnung (S) aufweist, vier Schalter (S1, S2, S3, S4) aufweisend, wobei jeder Schalter angepasst ist auf eine selektive und zeitbasierte Weise betätigt zu werden, um den Strom an einen Transformator (T) weiterzuleiten, das Verfahren ferner aufweisend:
a. Betätigen der Schalter, um einen Durchgang des Stroms zu einer ersten Windung (TW1) des Transformators in einer ersten Richtung zu ermöglichen; oder
b. Betätigen der Schalter, um einen Durchgang des Stroms zur ersten Windung (TW1) des Transformators in einer zweiten Richtung entgegen der ersten Richtung zu ermöglichen;
c. Betätigen der Schalter, um ein Übergehen der ersten Windung (TW1) des Transformators zu ermöglichen.

6. Verfahren nach Anspruch 5, aufweisend Induzieren eines induzierten Stroms in der sekundären Windung (TW2) des Transformators, wobei der induzierte Strom in eine Gleichrichterkonfiguration (B) eingegeben wird, wodurch ein gleichgerichteter Strom erzeugt wird.

7. Verfahren nach Anspruch 6, wobei eine Variation des gleichgerichteten Stromausgangs vom Gleichrichter mittels eines Kondensators (C) geglättet wird, der parallel mit dem Gleichrichter (B) verbunden ist.

8. Verfahren nach einem der Ansprüche 6 oder 7, wobei der Schritt zum Übergehen des Transformators (T) während einer gesteuerten Zeitdauer ausgeführt wird.

9. Computerprogrammprodukt, das direkt in den internen Speicher eines digitalen Computers geladen werden kann, aufweisend Softwarecode-Abschnitte zum Ausführen des Verfahrens nach einem der Ansprüche 5 bis 8, wenn das Programm auf einem Computer abläuft.

10. Computerlesbares Datenspeichermittel, das computerlesbares Programmmittel zum Durchführen des Verfahrens nach einem der Ansprüche 5 bis 8 beinhaltet.

## Revendications

1. Système pour fournir de l'énergie électrique à une charge (26) au moyen d'une ligne de communication sous-marine (20), le système comprenant un convertisseur (25), dans lequel le convertisseur est raccordé selon une configuration en série sur la ligne de communication sous-marine (20) et est configuré pour convertir un courant (A) circulant dans la ligne de communication sous-marine (20) en une tension disponible au niveau de ports parallèles (25c, 25d) du convertisseur, **caractérisé en ce que**
le convertisseur comprend en outre un agencement de commutation (S) comprenant quatre commutateurs (S1, S2, S3, S4), chaque commutateur étant conçu pour être actionné de manière sélective et basée sur le temps afin de transmettre ledit courant à un transformateur (T) de telle sorte qu'un premier actionnement desdits commutateurs permette un passage du courant dans un premier enroulement (TW1) du transformateur dans une première direction ; qu'un deuxième actionnement desdits commutateurs permette un passage du courant dans le premier enroulement (TW1) du transformateur dans une seconde direction opposée à la première direction ; et qu'un troisième actionnement desdits commutateurs permette un court-circuitage du premier enroulement (TW1) du transformateur.

2. Système selon la revendication 1, dans lequel le transformateur (T) comprend un enroulement secondaire (TW2) raccordé à un redresseur (B).

3. Système selon la revendication 1 ou la revendication 2, dans lequel un condensateur (C) est raccordé selon un agencement parallèle au redresseur (B).

4. Réseau de télécommunication sous-marin (2) comprenant le système selon l'une quelconque des revendications 1 à 3.

5. Procédé pour fournir de l'énergie électrique à une charge (26) au moyen d'une ligne de communication sous-marine (20) transportant un courant continu (CC) de réseau fédérateur (A), le procédé comprenant l'entrée du courant continu de réseau fédérateur (A) provenant de la ligne de communication sous-marine (20) dans un convertisseur (25) raccordé en série sur la ligne de communication sous-marine (20), la conversion du courant continu de réseau fédérateur (A) en une tension et la transmission en sortie du courant continu de réseau fédérateur (A) à la ligne de communication sous-marine (20), dans lequel le convertisseur (25) comprend un agencement de commutation (S) comprenant quatre commutateurs (S1, S2, S3, S4), chaque commutateur étant conçu pour être actionné de manière sélective et basée sur le temps afin de transmettre ledit courant à un transformateur (T), le procédé comprenant en outre :
a. l'actionnement desdits commutateurs pour permettre un passage du courant dans un premier enroulement (TW1) du transformateur dans une première direction ; ou
b. l'actionnement desdits commutateurs pour permettre un passage du courant dans le premier enroulement (TW1) du transformateur dans une seconde direction opposée à la première direction ;
c. l'actionnement desdits commutateurs pour permettre un court-circuitage du premier enroulement (TW1) du transformateur.

6. Procédé selon la revendication 5, comprenant l'induction d'un courant induit dans l'enroulement secondaire (TW2) du transformateur, dans lequel le courant induit est entré dans une configuration de redresseur (B), ce qui permet de produire un courant redressé.

7. Procédé selon la revendication 6, dans lequel une variation du courant redressé sorti du redresseur est lissée au moyen d'un condensateur (C) raccordé en parallèle au redresseur (B)

8. Procédé selon l'une quelconque des revendications 6 et 7, dans lequel l'étape de court-circuitage du transformateur (T) est réalisée pendant une période de temps contrôlée.

9. Produit-programme d'ordinateur pouvant être directement chargé dans la mémoire interne d'un ordinateur numérique, comprenant des parties de code de logiciel pour réaliser le procédé selon l'une quelconque des revendications 5 à 8 lorsque le programme est exécuté sur un ordinateur.

10. Moyen de stockage lisible par ordinateur contenant un moyen de programme lisible par ordinateur pour mettre en oeuvre le procédé selon l'une quelconque des revendications 5 à 8.
